# EUROPEAN PATENT SPECIFICATION

(11) **EP 0 867 339 B1**
(45) Date of publication and mention of the grant of the patent: **04.12.2002**
(21) Application number: 98660026.0
(22) Date of filing: 25.03.1998
(51) Int. Cl.: B60Q 7/00

(54) **Hinge arrangement for warning triangle legs**
Gelenk für Warndreiecke
Dispositif d'articulation des pieds d'un triangle de signalisation

(30) Priority: 27.03.1997 FI 971322
(43) Date of publication of application: 30.09.1998
(73) Proprietor: Hella Lighting Finland Oy, 24800 Salo (FI)
(72) Inventor: Ahlfors, Leif, 25650 Strömma (FI); Virta, Heimo, 24280 Salo (FI)
(74) Representative: Roitto, Klaus

(56) References cited:
- EP-A- 0 258 906
- EP-A- 0 663 322

## Description

### BACKGROUND OF THE INVENTION

The invention relates to a warning triangle comprising a first side, a second side, a base portion and two pairs of legs provided with pivotable shafts for keeping the warning triangle in an operative position in which the legs are folded open, the first side, the second side and the base portion comprising reflective surfaces, and the base portion having attached to it an elongated plate-like frame, in the vicinity of whose both ends is a hinge member to which the legs are pivotably fastened in pairs by their pivotable shafts such that the first pair of legs is located in the vicinity of the first end of the frame and the second pair of legs is located in the vicinity of the second end of the frame.

Such a warning triangle according to the preamble of claim 1 is known from EP-A-0 258 906.

Such warning triangles are well known and often a mandatory equipment in vehicles, such as passenger cars. They are used in traffic to warn of impending danger and placed on the road prior to the danger area. A typical use is to warn of a vehicle left in a spot that is dangerous as far as the traffic is concerned.

Strict regulations pertain to the properties of warning triangles: there are regulations set by the authorities regarding e.g. the size and reflective characteristics of the reflective surfaces.

As far as the user, i.e. the motorist, is concerned, a warning triangle should be small when folded into a small size and preferably light. In addition it should be easy to erect into its operative position.

Fl patent publication 80354 teaches a warning triangle fulfilling reasonably well the above described properties that are important as far as the user is concerned. The hinge arrangement of this known warning triangle does not, however, utilize small legs to enable the warning triangle to be folded into an extremely small size.

### BRIEF DESCRIPTION OF THE INVENTION

It is the object of the present invention to provide a new warning triangle, the hinge arrangement of whose legs enables the warning triangle to be folded into an extremely small size for placing it into a small-sized casing. To achieve this, the pivotable shafts of the first pair of legs are arranged in succession such that they are in a plane that is substantially parallel with respect to a plane formed by the plate-like frame, and the pivotable shafts of the second pair of legs are arranged in succession such that they are in a plane that is substantially parallel with the plane formed by the plate-like frame. Light and small legs are preferably achieved of metal wire by bending. Such legs are fastened in pairs to the hinge member preferably by fastening the first pair of legs to a first hinge member comprising two flexible branches for fastening the hinge member to the frame by spring force, the second pair of legs being fastened to a second hinge member comprising two flexible branches for fastening the hinge member to the frame by spring force. Such hinge members are easy to make and can be fastened to the plate-like frame. The hinge members are preferably fastened to the area between the ends of the base portion to a slot provided in the frame, whereby the hinge members do not project from the frame when the warning triangle is folded into its storage position.

Preferred embodiments of the invention are disclosed in the attached claims 2 to 7.

The most important advantages of the warning triangle of the invention are that it can be folded into a very small space such that the hinge structure of the legs does not project from the surfaces of the warning triangle. According to a preferred embodiment, the hinge structure of the legs is in its entirety arranged in an area between the ends of the frame of the warning triangle, enabling the transportation of the warning triangle in a very small case. In addition, the use of a hinge member comprising flexible branches makes it extremely easy to fasten the hinge structure of the warning triangle to the warning triangle during the manufacture thereof.

### BRIEF DESCRIPTION OF THE FIGURES

In the following the invention will be described in greater detail by means of a preferred embodiment with reference to the attached drawing, in which:
Figure 1 is a front view of a warning triangle according to the invention, with the legs thereof folded into a transport position;
Figure 2 shows the frame of the warning triangle of Figure 1;
Figure 3 shows a hinge member of the warning triangle;
Figure 4 is a section along line IV - IV of Figure 3;
Figure 5 is a section along line V - V of Figure 3; and
Figures 6 and 7 illustrate the travel paths of the legs of the warning triangle in the vicinity of the hinge member.

### DETAILED DESCRIPTION OF THE INVENTION

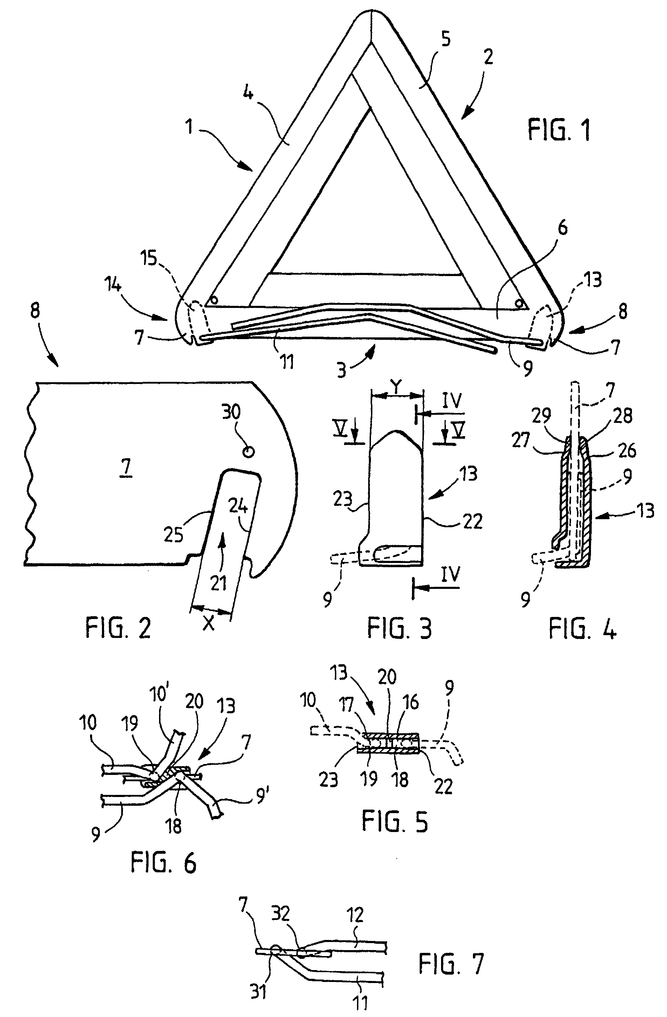

The warning triangle of Figure 1 comprises a first side 1, a second side 2, a base portion 3 and two pairs of legs made of steel wire for keeping the warning triangle in an open position, i.e. an operative position. The sides 1, 2 and the base portion 3 comprise reflective surfaces 4 to 6. To the reflective surface of the base portion 3 is attached a plate-like metal frame 7 which is located behind the base portion in Figure 1. The length of the metal frame 7 corresponds to the length of the base portion 3 and its right end 8 is shown enlarged in Figure 2.

The triangle comprises a first pair of legs 9, 10 and a second pair of legs 11, 12. Figure 1 shows one pair of legs 9, 11 while the other pair of legs remains behind the base portion 3. The first pair of legs 9, 10 is visible in Figure 6 which shows a hinge member 13 to be fastened to the right end 8 of the frame 7 of the base portion for fastening the legs to the frame. In Figure 6 the reference numbers 9' and 10' illustrate the position of the legs when the warning triangle is in its operative position. The second pair of legs 11, 12 is visible in Figure 7 which shows the legs similarly fastened to the left end 14 of the frame 7 of the base portion.

In Figures 3 to 5 the hinge member 13 is shown enlarged. The hinge member 13 comprises bearing spaces 16, 17 housing pivotable shafts 18, 19 of the ends of the legs 9, 10. In the longitudinal direction of the frame 7, the pivoted shafts 18, 19 are in succession such that they are located in a plane substantially parallel to the plane defined by the frame.

The bearing spaces 16, 17 are separated from each other by means of a partition 20 and the hinge member 13 is open in its sides 22, 23, grooves being formed in the sides, see Figures 5 and 6. The hinge member 13 fits into a slot 21 provided in the frame 7 such that the sides 22, 23 rest against the sides 24, 25 of the slot 21, cf. Figure 2. For this reason the width X of the slot 21 is smaller than the width Y of the hinge member 13. Owing to the partition 20, the hinge member 13 is rigid and its sides 22, 23 are firmly against the sides 24, 25 of the slot. It is feasible that the partition separating the bearing spaces 16, 17 from each other is provided in the frame 7 instead of being provided in the hinge member 13.

In order to be able to lock the hinge member 13 at a desired point of the frame 7, it comprises flexible branches 26, 27 with locking tips 28, 29 to be installed by spring force to a recess or hole 30 in the frame 7. When the hinge member 13 is made of plastic, the branches 26, 27 are also flexible.

By the arrangement described above, the pivotable shafts 18, 19 formed by the ends of the legs 9, 10, are located at least mainly within the slot 21 of the frame.

A hinge member 15 whose structure corresponds to that of the hinge member 13 is arranged at the left end 14 of the warning triangle for the second pair of legs 11, 12. As is evident from Figure 7, the hinge member 15 for the pivotable shafts 31, 32 of the second pair of legs 11, 12 is a mirror image of the hinge member 13.

In the above the invention has been described by means of only one example and it is therefore pointed out that the details of the invention can be implemented in a variety of ways within the scope of the attached claims. Thus, the hinge members 13, 15 do not necessarily have to be disposed at the ends of the base portion 3 of the warning triangle, although this is recommendable in order for the legs 9, 10, 11, 12 to become sufficiently long, and consequently the warning triangle steady when erected. For fastening the hinge members 13, 15 to the frame 7 it is feasible that some kind of projections, locked to corresponding slots in the hinge members 13, 15 are used, or that the frame 7 comprises recesses or grooves which lock to corresponding projections in the hinge members 13, 15. The legs 9, 10, 11, 12 do not have to be made of steel wire, but it is feasible that another product is used for making the legs.

## Claims

1. A warning triangle comprising a first side (1), a second side (2), a base portion (3) and two pairs of legs (9, 10 and 11, 12) provided with pivotable shafts (18, 19, 31, 32) for keeping the warning triangle in an operative position in which the legs are folded open, the first side, the second side and the base portion comprising reflective surfaces (4, 5, 6), and the base portion having attached to it an elongated plate-like frame (7), in the vicinity of whose both ends (8 and 14) is a hinge member (13, 15) to which the legs are pivotably fastened in pairs by their pivotable shafts (18, 19, 31, 32) such that the first pair of legs (9, 10) is located in the vicinity of the first end (8) of the frame and the second pair of legs (11, 12) is located in the vicinity of the second end (14) of the frame, **characterized in that** the pivotable shafts (18, 19) of the first pair of legs (9, 10) are arranged in succession such that they are in a plane that is substantially parallel with respect to a plane formed by the plate-like frame (7), and the pivotable shafts (31, 32) of the second pair of legs (11, 12) are arranged in succession such that they are in a plane that is substantially parallel with the plane formed by the plate-like frame (7).

2. A warning triangle as claimed in claim 1, **characterized in that** the legs (9, 10, 11, 12) are wire-like and **in that** the first pair of legs (9, 10) is fastened to the first hinge member (13) comprising two flexible branches (26, 27) for fastening the hinge member (13) to the frame (7) by spring force, and the second pair of legs (11, 12) is fastened to the second hinge member (15) comprising two flexible branches for fastening the hinge member (15) to the frame (7) by spring force.

3. A warning triangle as claimed in claim 2, **characterized in that** the hinge members (13, 15) are arranged in the area between the ends of the base portion (3).

4. A warning triangle as claimed in claim 2 or 3, **characterized in that** the frame (7) is provided with recesses (30) for receiving locking tips (28, 29) arranged at the ends of the flexible branches (26, 27) of the hinge members (13, 15).

5. A warning triangle as claimed in claim 2 or 3, **characterized in that** the hinge members (13, 15) each comprise a partition (20) for separating bearing spaces (16, 17) receiving the ends of the legs (9 to 12) from each other, the frame (7) being provided with a slot (21) for receiving the partition (20) and the ends of the legs (9, 10, 11, 12).

6. A warning triangle as claimed in claim 5, **characterized in that** width X of the slot (21) is smaller than the width Y of the hinge member (13, 15), sides (22, 23) of the hinge member being provided with grooves for receiving edges (24; 25) of the slot (21).

7. A warning triangle as claimed in claim 2, **characterized in that** the hinge members (13, 15) are made of plastic material.

## Patentansprüche

1. Warndreieck, umfassend: eine erste Seite (1), eine zweite Seite (2), ein Basisteil (3) und zwei Paare von mit schwenkbaren Achsen (18, 19, 31, 32) versehenen Ständern (9, 10 und 11, 12) zum Halten des Warndreiecks in Funktionsstellung, in welcher die Ständer auseinandergefaltet sind, wobei die erste Seite, die zweite Seite und das Basisteil reflektierende Oberflächen (4, 5, 6) aufweisen und am Basisteil ein länglicher plattenartiger Rahmen (7) befestigt ist, und in der Nähe von dessen beiden Enden (8 und 14) ein Scharnierteil (13, 15) vorhanden ist, an welchen die Ständer paarweise um ihre schwenkbaren Achsen derart schwenkbar befestigt sind, dass das erste Paar von Ständern (9, 10) in der Nähe des ersten Endes (8) des Rahmens und das zweite Paar von Ständern (11, 12) in der Nähe des zweiten Endes (14) des Rahmens angeordnet ist, **dadurch gekennzeichnet, dass** die schwenkbaren Achsen (18, 19) des ersten Paares von Ständern (9, 10) aufeinanderfolgend so angeordnet sind, dass sie sich in einer Ebene befinden, welche im Wesentlichen parallel zu einer Ebene liegt, welche durch den plattenartigen Rahmen (7) gebildet ist, und die schwenkbaren Achsen (31, 32) des zweiten Paares von Ständern (11, 12) aufeinanderfolgend so angeordnet sind, dass sie sich in einer Ebene befinden, welche im Wesentlichen parallel zu der Ebene liegt, die durch den plattenartigen Rahmen (7) gebildet ist.

2. Warndreieck nach Anspruch 1, **dadurch gekennzeichnet, dass** die Ständer (9, 10, 11, 12) drahtartig sind, und dadurch, dass das erste Paar von Ständern (9, 10) an einem ersten Scharnierteil (13) befestigt ist, welches zwei flexible Teile (26, 27) zur Befestigung des Scharnierteiles (13) am Rahmen (7) durch Federkraft umfasst, und das zweite Paar von Ständern (11, 12) an dem zweiten Scharnierteil (15) befestigt ist, welches zwei flexible Teile zur Befestigung des Schamierteiles (15) am Rahmen (7) durch Federkraft umfasst.

3. Warndreieck nach Anspruch 2, **dadurch gekennzeichnet, dass** die Scharnierteile (13, 15) in dem Abschnitt zwischen den Enden des Basisteiles (3) angeordnet sind.

4. Warndreieck nach den Ansprüchen 2 oder 3, **dadurch gekennzeichnet, dass** der Rahmen (7) mit Ausnehmungen (30) zur Aufnahme von Verriegelungsspitzen (28, 29) versehen ist, welche an den Enden der flexiblen Teile (26, 27) der Scharnierteile (13, 15) ausgebildet sind.

5. Warndreieck nach den Ansprüchen 2 oder 3, **dadurch gekennzeichnet, dass** jedes der Scharnierteile (13, 15) eine Trennwand (20) zur Abtrennung von Haltekammern (16, 17) umfasst, welche die Enden der Ständer (9 bis 12) einzeln aufnehmen, und der Rahmen (7) mit einem Schlitz (21) zur Aufnahme der Trennwand (20) und der Enden der Ständer (9, 10, 11, 12) versehen ist.

6. Warndreieck nach Anspruch 5, **dadurch gekennzeichnet, dass** die Breite X des Schlitzes (21) kleiner ist als die Breite Y des Scharnierteiles (13, 15) und die Seiten (22, 23) des Scharnierteiles mit Nuten zur Aufnahme der Kanten (24, 25) des Schlitzes (21) versehen sind.

7. Warndreieck nach Anspruch 2, **dadurch gekennzeichnet, dass** die Scharnierteile (13, 15) aus Kunststoffmaterial hergestellt sind.

## Revendications

1. Triangle de signalisation constitué d'un premier côté (1), d'un deuxième côté (2), d'une base (3) et de deux paires de pieds (9, 10 et 11, 12) prévus avec des arbres pivotants (18, 19, 31, 32) pour maintenir le triangle de signalisation dans une position de service dans laquelle les pieds sont dépliés, le premier côté, le deuxième côté et la base comprenant des surfaces réfléchissantes (4, 5, 6) et à la base étant fixé un cadre allongé en forme de plaque (7) à proximité de chacune des deux extrémités (8 et 14) duquel est prévue une charnière (13, 15) à laquelle les pieds sont fixés par paire avec possibilité de pivotement par leurs arbres pivotants (18, 19, 31, 32) de telle manière que la première paire de pieds (9, 10) est située à proximité de la première extrémité (8) du cadre et que la deuxième paire de pieds (11, 12) est située à proximité de la deuxième extrémité (14) du cadre, **caractérisé en ce que** les arbres pivotants (18, 19) de la première paire de pieds (9, 10) sont placés l'un à la suite de l'autre de façon à se trouver dans un plan qui soit sensiblement parallèle à un plan formé par le cadre en forme de plaque (7) et **en ce que** les arbres pivotants (31, 32) de la deuxième paire de pieds (11, 12) sont placés l'un à la suite de l'autre de façon à se trouver dans un plan qui soit sensiblement parallèle au plan formé par le cadre en forme de plaque (7).

2. Triangle de signalisation suivant la revendication 1, **caractérisé en ce que** les pieds sont semblables à des fils métalliques et **en ce que** la première paire de pieds (9, 10) est fixée à la première charnière (13) formée de deux branches flexibles (26, 27) destinées à fixer la charnière (13) au cadre (7) par une force élastique, et la deuxième paire de pieds (11, 12) est fixée à la deuxième charnière (15) formée de deux branches flexibles destinées à fixer la charnière (15) au cadre (7) par une force élastique.

3. Triangle de signalisation suivant la revendication 2, **caractérisé en ce que** les charnières (13, 15) sont disposées dans l'espace entre les extrémités de la base (3).

4. Triangle de signalisation suivant la revendication 2 ou 3, **caractérisé en ce que** le cadre (7) comporte des encoches (30) destinées à recevoir des têtes de verrouillage (28, 29) placées aux extrémités des branches flexibles (26, 27) des charnières (13, 15).

5. Triangle de signalisation suivant la revendication 2 ou 3, **caractérisé en ce que** les charnières (13, 15) comprennent chacune un élément de séparation (20) destiné à séparer les espaces de palier (16, 17) recevant les extrémités des pieds (9 à 12), le cadre (7) étant pourvu d'une fente (21) destinée au logement de l'élément de séparation (120) et des extrémités des pieds (9, 10, 11, 12).

6. Triangle de signalisation suivant la revendication 5, **caractérisé en ce que** la largeur X de la fente (21) est inférieure à la largeur Y de la charnière (13, 15), les côtés (22, 23) de la charnière étant pourvus de rainures destinées à recevoir les bords (24, 25) de la fente (21).

7. Triangle de signalisation suivant la revendication 2, **caractérisé en ce que** les charnières (13, 15) sont réalisées en matière plastique.
